Europäisches Patentamt

European Patent Office

Office européen des brevets

(11) Veröffentlichungsnummer : **0 527 176 B1**

## (12) EUROPÄISCHE PATENTSCHRIFT

(45) Veröffentlichungstag der Patentschrift :
22.06.94 Patentblatt 94/25

(51) Int. Cl.$^5$ : **G01N 11/16**

(21) Anmeldenummer : **91908653.8**

(22) Anmeldetag : **30.04.91**

(86) Internationale Anmeldenummer :
**PCT/EP91/00826**

(87) Internationale Veröffentlichungsnummer :
**WO 91/17421 14.11.91 Gazette 91/26**

(54) VORRICHTUNG ZUR MESSUNG DER VISKOSITÄT VON FLUIDEN.

(30) Priorität : **01.05.90 DE 4013980**

(43) Veröffentlichungstag der Anmeldung :
**17.02.93 Patentblatt 93/07**

(45) Bekanntmachung des Hinweises auf die
Patenterteilung :
**22.06.94 Patentblatt 94/25**

(84) Benannte Vertragsstaaten :
**AT CH DE FR GB IT LI**

(56) Entgegenhaltungen :
FR-A- 960 197
J. Applied Physics, Band 49, Nr. 3/1, März
1978, American Institute of Physics, W.H. Robinson et al.: "Piezoelectric method of determining viscosity at 40 kHz", Seiten 1070-1076.
Transaction of the Faraday Society, Band 67,
1973, A.F. Collings et al.: "Torsional crystal
technique for the measurement of viscosities
of liquids at high pressure", Seiten 340-352.

(56) Entgegenhaltungen :
Journal of Physics D: Applied Physics, Band
22, Nr. 8, 14. August 1989, IOP Publishing Ltd.,
(Bristol, GB), M.S. Mathur et al.: "Energetic
H2+ assisted deposition of thin films of Ag",
Seiten 1228-1230.

(73) Patentinhaber : **NOACK, Gerhard**
**Herzberger Landstrasse 11**
**D-37085 Göttingen (DE)**
Patentinhaber : **BODE, Bertold**
**Kirchtal 36**
**D-37412 Herzberg (DE)**
Patentinhaber : **GUNDRUM, Jürgen**
**Siebensternweg 5**
**D-38678 Clausthal-Zellerfeld (DE)**

(72) Erfinder : **BODE, Bertold**
**Kirchtal 36**
**D-3420 Herzberg/Lonau (DE)**
Erfinder : **GUNDRUM, Jürgen**
**Siebensternweg 5**
**D-3392 Clausthal-Zellerfeld (DE)**

(74) Vertreter : **Wallinger, Michael Dr.**
**Maximilianstrasse 58**
**D-80538 München (DE)**

## Beschreibung

Die vorliegende Erfindung betrifft eine Vorrichtung zur Messung der Viskosität von Fluiden, insbesondere von Flüssigkeiten und Gasen und ein Verfahren zur Herstellung eines Sensors, der innerhalb der erfindungsgemäßen Vorrichtung verwendet werden kann.

Eine Vorrichtung, die im wesentlichen dem Oberbegriff des Anspruchs 1 entspricht, ist schon aus FR-A-960197 bekannt.

Die Viskosität, die eine physikalische Kenngröße zur Beschreibung des Fließverhaltens von Fluiden darstellt, ist eine der wichtigsten Parameter einer Flüssigkeit. Die Viskosität ist z.B. von entscheidender Bedeutung bei der Auswahl von Schmierstoffen und ist auch eine wichtige Regelgröße bei der Steuerung und Regelung von chemischen und physikalischen Prozessen. Die Definition der dynamischen Viskosität ergibt sich für Newton'sche Flüssigkeiten aus der Newton'schen Schubspannungsgleichung

$$\tau = \eta \cdot (du/dy).$$

In dieser Gleichung ist $\tau$ die Schubspannung, $\eta$ die Viskosität und du/dy das Geschwindigkeits- oder Schergefälle.

Bekannte Viskosimeter zur Ermittlung der dynamischen oder der auf die Dichte des Fluids bezogenen kinematischen Viskosität sind z.B. Kapillarviskosimeter, Kugelfallviskosimeter und Rotationsviskosimeter. Diese bekannten Viskosimeter haben jedoch den großen Nachteil, daß damit nur kleine Schergefälle du/dy erzeugt werden können. Da die meisten Flüssigkeiten eine mehr oder weniger große Abweichung vom Newton'schen Verhalten einer idealen Flüssigkeit aufweisen, ist es zur Beurteilung des Viskositätsverhaltens von Schmierstoffen jedoch erforderlich, die im Schmierspalt auftretenden hohen Schergefälle von $10^4$ bis $10^8$ $sec^{-1}$ nachvollziehen zu können, um eine korrekte Aussage über das Fließverhalten des Fluids im Schmierspalt zu ermöglichen. Des weiteren haben die vorgenannten Viskosimeter den Nachteil, daß damit in der Regel nur die Untersuchung von einzelnen, isolierten Proben unter Laborbedingungen vorgenommen werden kann. Der Einsatz dieser Viskosimeter im Online-Betrieb zur Steuerung von chemischen und physikalischen Prozessen ist deshalb nicht oder nur unter sehr schwierigen Bedingungen möglich.

Es wurde deshalb schon vor einigen Jahrzehnten vorgeschlagen, die Viskosität von Flüssigkeiten mittels schwingender Quarze zu messen. Die den Schwingquarz umgebende Flüssigkeit dämpft die Schwingung, wobei aus der Dämpfung auf die Viskosität der Flüssigkeit geschlossen werden kann. Durch unterschiedliche Schnittrichtungen des Quarzkristalles, bezogen auf die Kristallstruktur, läßt sich das Schwingungsverhalten des Quarzes beeinflussen. Für die Viskositätsmessung besonders geeignet sind Schwingquarze, die so aus dem Quarzkristall geschnitten sind, daß sie eine weitgehend reine Scherschwingung ausführen, d.h. daß eine möglichst reine Scherbewegung an der Oberfläche erzeugt wird und der prozentuale Anteil von Longitudinalwellen klein gehalten wird. Dies gilt z.B. für dünne Längsdehnungsschwinger, die bereits in Forschungslaboratorien zur Messung von Viskositäten eingesetzt worden sind.

Eine besonders reine Scherschwingung wird von einem Torsionsschwinger, d.h von einem entsprechend geschnittenen zylindrischen Quarzkristall ausgeführt. Diese Kristallform wäre deshalb für die Verwendung in einem Viskosimeter besonders geeignet.

Die Verwendung von Quarzen für ein Viskosimeter stößt jedoch auf eine ganze Reihe von Schwierigkeiten, die dazu geführt haben, daß bis heute weltweit kein funktionsfähiges Viskosimeter, welches auf diesem Meßprinzip aufbaut, im Handel erhältlich ist.

Diese Schwierigkeiten liegen vor allem darin begründet, daß es bislang weder mit Torsionsschwingern noch mit Längsdehnungsschwingern gelungen ist, reproduzierbare Meßergebnisse mit Geräten zu erzielen, die für eine industrielle Anwendung geeignet sind. Die in Forschungslaboratorien gebauten Quarzviskosimeter zeigen zwar die grundsätzliche Eignung des Meßprinzips für die Viskositätsmessung, es ist jedoch bislang nicht gelungen, ein Viskosimeter und insbesondere den Quarzsensor so zu gestalten, daß eine ausreichende Langzeitstabilität hinsichtlich der Reproduzierbarkeit und Genauigkeit der Meßergebnisse erzielt wird.

Der vorliegenden Erfindung liegt deshalb die Aufgabe zugrunde, eine Vorrichtung zur Messung der Viskosität unter Verwendung eines zu Schwingungen angeregten Sensors zu schaffen, welche eine genaue und reproduzierbare Messung der Viskosität innerhalb eines weiten Viskositäts- und Temperaturbereiches ermöglicht. Dabei soll das entsprechende Meßverfahren so beschaffen sein, daß es weitgehend automatisiert und in kurzer Zeit durchgeführt werden kann, so daß eine Online-Messung der Viskosität und damit ein Einsatz des Meßgerätes innerhalb einer Prozeßsteuerung möglich ist.

Diese Aufgabe wird erfindungsgemäß durch eine Vorrichtung gemäß Anspruch 1 gelöst. Ein Verfahren zur Herstellung des Quarzsensors für die Vorrichtung gemäß Anspruch 1 ist Gegenstand des Anspruches 20.

Zu bevorzugende Ausgestaltungen der Erfindung sind Gegenstand der Unteransprüche.

Mit dem erfindungsgemäßen Viskosimeter wird erstmals eine Meßvorrichtung geschaffen, die, aufbauend auf der Verwendung eines Torsionsschwingers, die zuverlässig reproduzierbare Messung der Viskosität in einem weiten Viskositäts- und Temperaturbereich ermöglicht.

Es hat sich gezeigt, daß die problematische Reproduzierbarkeit, die bei Viskositätsmessungen mit Schwingquarzen generell, d.h. unabhängig von der jeweiligen Form des Sensors beobachtet wird, im wesentlichen von Einflüssen herrührt, die sich aus der Verbindung zwischen den übrigen Teilen der Meßeinrichtung und dem Sensor ergeben.

Bei dem erfindungsgemäßen Viskosimeter erfolgt die Kontaktierung zwischen den auf dem Meßsensor aufgebrachten Elektroden und der eigentlichen Spannungszuführung über metallische Halteelemente, die zum einen den Sensor halten und die zum anderen über eine eingebrannte Metallverbindung eine zuverlässige elektrische Kontaktverbindung von Elektrode und Spannungszuführung bewirken. Bei den bekannten Laborversuchen mit Quarzviskosimetern wurde die Verbindung zwischen den auf dem Quarz angeordneten Elektroden und der Spannungszuführung über eine elektrisch leitende Klebeverbindung bewirkt. Sobald derartige Quarze jedoch zur Messung in eine Flüssigkeit eingetaucht werden, kann Flüssigkeit in den Kontaktbereich eindiffundieren oder diesen unterwandern und das Meßergebnis verfälschen. Da das Meßsignal des Quarzsensors im Mikro- bzw. Millivoltbereich liegt, können aber bereits geringste Abweichungen in der Kontaktierung das Meßergebnis verfälschen.

Versuche mit dem erfindungsgemäßen Viskosimeter haben gezeigt, daß das Einbrennen einer metallischen Verbindung im Kontaktbereich zwischen metallischem Halteelement und der Elektrode bzw. der Elektrodenverbindung eine absolut zuverlässige Verbindung schafft, die auch nach einer Vielzahl von Betriebsstunden ein unverändertes elektrisches und mechanisches Verhalten zeigt.

In der Beschreibung bevorzugter Ausführungsbeispiele des erfindungsgemäßen Viskosimeters wird ein aus Quarz, d.h. aus $SiO_2$ bestehender Meßsensor beschrieben. Es wird jedoch darauf hingewiesen, daß die grundlegende physikalische Eigenschaft, die die Viskositätsmessung mit einem Quarzkristall ermöglicht, dessen piezoelektrische Eigenschaft ist. Darunter ist im vorgenannten Fall der sogenannte sekundäre piezoelektrische Effekt zu verstehen, d.h. die Tatsache, daß der Quarzkristall einer mechanischen Deformation unterworfen wird, wenn eine elektrische Spannung an ihn angelegt wird. Als Meßsensor im Sinne der vorliegenden Erfindung kann deshalb nicht nur ein Quarzkristall verwendet werden, es können auch andere Materialien eingesetzt werden, die den gewünschten piezoelektrischen Effekt und ein die Viskositätsmessung ermöglichendes Schwingungsverhalten aufweisen.

Vorzugsweise wird jedoch ein Quarzkristall verwendet, der aus $SiO_2$ erhöhter Reinheit mit wenig Fehlstellen besteht.

Als Einbrennpräparat wird vorzugsweise ein Silbereinbrennpräparat verwendet, welches bei einer Temperatur von 500 bis 550 °C einbrennt. Die Versuche mit einem solchen Einbrennpräparat wurden unternommen, obwohl in der Fachwelt die Ansicht vertreten wird, daß zu Meßzwecken verwendete Quarze möglichst nicht über eine Temperatur von über 200 °C hinaus erhitzt werden sollen. Tatsächlich hat es sich jedoch gezeigt, daß der Quarzsensor eine Temperatur von bis zu 550 °C, die unter der Curietemperatur von 573 °C liegt, durchaus verträgt, vorausgesetzt daß der Quarzsensor nicht zu großen Temperaturgradienten unterworfen wird.

Die Verwendung eines Einbrennpräparates, das bei dieser hohen Temperatur einbrennt, hat nicht nur den Vorteil, daß die Verbindung mechanisch und elektrisch besonders stabil ist und ein ausgezeichnetes Langzeitverhalten aufweist. Weiterhin wird es dadurch auch möglich, den Quarzsensor in einem Temperaturbereich von bis zu 350 °C einzusetzen, der bisher für Quarzviskosimeter als unerreichbar galt. Der Temperaturbereich bis 350 °C ist aber deshalb für ein Viskosimeter besonders wichtig, da Schmieröle, wie sie z.B. in Getrieben oder in Verbrennungskraftmaschinen verwendet werden, dem Einfluß von hohen und höchsten Temperaturen unterliegen, so daß Viskositätsmessungen in diesem Temperaturbereich benötigt werden. Auch bei verfahrenstechnischen Prozessen, wie z.B. bei der Erdölraffination oder bei der Erzeugung und Verarbeitung von Kunststoffen sind Viskositätsmessungen bei hohen Temperaturen von großer Bedeutung.

Weiterhin hat sich gezeigt, daß das erfindungsgemäße Quarzviskosimeter auch für sehr hohe Drücke in einem Bereich bis zu 10.000 bar eingesetzt werden kann. Dieser Druckbereich ist wichtig, um das Viskositäts-Druckverhalten von Schmierstoffen vorherzusagen, die in elastohydrodynamischen Kontakten, wie sie z.B. bei Zahnrad- und Reibgetrieben oder bei Wälzlagern, aber auch bei Verformungsprozessen wie z.B. beim Tiefziehen vorliegen, eingesezt werden.

Die Elektroden des Quarzsensors bestehen vorzugsweise aus einer Edelmetallschicht, d.h. Silber, Platin oder, besonders bevorzugt, Gold. Die Elektroden können aufgedampft werden. Gemäß einer bevorzugten Ausführungsform der Erfindung werden aber auch die Elektroden mittels eines Einbrennpräparates eingebrannt. Dadurch wird eine gute und mechanisch besonders stabile Kontaktierung zwischen Elektroden und dem piezoelektrischen Grundkörper erreicht, die das Langzeitverhalten des Sensors ebenfalls positiv beeinflusst.

Der Metallfilm, der auf den Stirnseiten des zylindrischen Meßsensors aufgebracht wird, besteht ebenfalls vorzugsweise aus einer Edelmetallschicht, wobei auch hier vorzugsweise Silber oder Platin, besonders bevorzugt aber Gold eingesetzt wird. Als Material für die metallischen Halteelemente, die bevorzugt als zylindrische Metallstifte teilweise in den Quarz eingelassen werden, hat sich besonders Edelstahl bewährt. Bei der Wahl der metallischen Halteelemente ist zu berücksichtigen, daß der Quarzsensor mit den Halteelementen zumindest bis zur Einbrenntemperatur des Einbrennpräparates erhitzt werden muß. Es ist deshalb besonders darauf zu achten, daß die Ausdehnungskoeffizienten des Materials des Meßsensors und der metallischen Halteelemente einigermaßen übereinstimmen, um hier Probleme zu vermeiden. Eine besonders präzise Anpassung ergibt sich, wenn der Wärmeausdehnungskoeffizient des für den Meßsensor verwendeten Materials in der gleichen Richtung gemessen wird, in der auch die metallischen Halteelemente eingesetzt werden.

Der Quarzsensor mit den metallischen Halteelementen wird vorzugsweise in eine Halteeinrichtung des Viskosimeter-Basiskörpers eingesetzt. Um eine möglichst freie Lage des Meßsensors zu erreichen, andererseits aber lange und insbesondere unterschiedliche Stromübertragungswege zu verhindern, wird der Quarzsensor vorzugsweise über zwei Bügel gehalten, die elektrisch isoliert am Basiskörper des Gehäuses gehalten sind. Die elektrische Isolierung kann durch isolierende Zwischenteile bewirkt werden; als besonders günstig hat es sich jedoch erwiesen, die Haltebügel und die mit ihnen verbundenen Meßdrahtzuleitungen in eine isolierende Masse einzugießen. Dabei wird, zur Erzielung einer hohen Temperaturstabiliät, die Verwendung einer keramischen oder einer Glasmasse bevorzugt.

Die Aufnahme des Meßsensors in die Bügel erfolgt vorzugsweise unmittelbar über die metallischen Halteelemente, die z.B. in entsprechende Ausnehmungen des Bügels eingeschoben werden. Eine zusätzliche Sicherung kann vorgesehen werden, um zu vermeiden, daß der Meßsensor bei höheren Strömungsgeschwindigkeiten des zu messenden Fluids aus der Verankerung gerissen wird.

Wie vorstehend erörtert, ist es ein besonderes Anliegen der Erfindung, das Viskosimeter so auszugestalten, daß es in einem möglichst breiten Anwendungsbereich ohne weitere Änderungen eingesetzt werden kann. Eine erhebliche Einschränkung der von den Forschungslaboratorien verwendeten Quarzviskosimeter hat sich durch die Beschränkung der physikalischen Eigenschaften des zu messenden Fluides ergeben. Um das Quarzviskosimeter für praktisch alle möglichen Fluide einsetzen zu können, schlägt die Erfindung vor, den Meßsensor und die entsprechenden Zuleitungsteile des Viskosimeters gegenüber dem Meßfluid elektrisch zu isolieren. Dies wird, gemäß einer bevorzugten Weiterbildung der Erfindung, dadurch erreicht, daß der mit den Elektroden und den Halteelementen versehene Meßsensor mit einer elektrisch isolierenden Schicht überzogen wird. Als besonders geeignet hat sich hier eine Schicht von $SiO_2$, d.h. das Quarzmaterial selbst, oder von $Al_2O_3$ erwiesen. Als besonders günstig hat sich eine Schichtdicke im Bereich von 1 bis 2 $\mu$m herausgestellt.

Mit dem derart isolierten Meßsensor ist es möglich, die Viskosität von elektrisch leitfähigen Fluiden zuverlässig zu messen.

Weiterhin ist es durch die Verwendung der Isolierung auch möglich, die Viskosität von Fluiden zu messen, die Bestandteile enthalten, die z.B. die aufgedampften oder eingebrannten Metallelektroden angreifen würden.

Durch die elektrische Isolierung wird auch allgemein eine Verbesserung der Reproduzierbarkeit von Viskositätsmessungen bewirkt, da viele Flüssigkeiten durch Bestandteile verunreinigt sind, die teilweise erst während des Gebrauches in die Flüssigkeit gelangen, und durch welche die elektrische Leitfähigkeit der Flüssigkeit beeinflußt wird. Es wird deshalb darauf hingewiesen, daß die Maßnahme der elektrischen Isolierung, insbesondere mit einer 1 bis 2 $\mu$m starken $SiO_2$- oder $Al_2O_3$-Schicht, auch bei nach dem piezoelektrischen Verfahren arbeitenden Viskositätssensoren einsetzbar ist, die von einer Gestaltung gemäß Anspruch 1 abweichen.

Gemäß einer bevorzugten Ausführungsform wird der piezoelektrische Grundkörper an seinen beiden umlaufenden Stirnkanten mit einer Rundung versehen, die vorzugsweise im Bereich zwischen 0,5 und 1,5 mm liegt. Dadurch wird der Kontaktübergang von den Stirnflächen zum Zylindermantel verbessert. Weiterhin wird im Falle des Aufbringens, insbesondere des Aufdampfens eines elektrisch isolierenden Überzuges das Aufbringen im Kantenbereich vereinfacht und der Überzug mechanisch stabiler.

Bei den aus Forschungslaboratorien bekannten Quarzviskosimetern geschieht die Bestimmung der Viskosität, indem die Resonanzfrequenzen des Quarzes unter dem Einfluß des Fluids ermittelt werden. Die Bestimmung der Resonanzfrequenz wird vorgenommen, indem die Frequenz einer am Meßsensor angelegten Wechselspannung so lange verändert wird, bis das relative Maximum des Spannungsabfalls am Quarz festgestellt wird. Die dazu erforderliche Frequenz ist die Resonanzfrequenz des Quarzes unter dem Einfluß der Dämpfung des Fluides und kann zur Berechnung der Viskosität bzw. des Viskositäts-Dichte-Produktes des Fluids herangezogen werden. Dieses bekannte Verfahren hat allerdings den Nachteil, daß die Anpassung der Meßeinrichtung zur Messung von Fluiden mit sehr unterschiedlicher Viskosität nur auf sehr umständliche Weise erfolgen kann.

Um die Genauigkeit der Messung zu verbessern und um insbesondere den Meßbereich des Viskosimeters im Hinblick auf ein universell einsetzbares Meßgerät zu erweitern, schlägt die Erfindung deshalb vor, die Auswerteeinheit so zu gestalten, daß dem Meßsignal des Quarzes eine veränderbare Gleichspannung überlagert werden kann. Vorzugsweise wird die Überlagerung der Gleichspannung über einen Rechner bzw. einen Mikroprozessor gesteuert, der vorzugsweise auch die Auswertung der Messung selbst übernimmt. Innerhalb des Rechenprogrammes werden dann zwei Grenzwerte definiert, bei deren Unter- bzw. Überschreiten die Polarität und/oder der Betrag der überlagerten Gleichspannung so geändert wird, daß die Meßeinrichtung und die Auswerteeinheit jeweils innerhalb ihres optimalen Arbeitsbereiches arbeiten. Damit kann das Viskosimeter ohne jede Veränderung bezüglich seiner Hardware oder Software zur Viskositätsmessung in einem äußerst weiten Bereich eingesetzt werden, der von gasförmigen Fluiden bis zu sehr zähen Flüssigkeiten reicht, d.h. in einem Viskositätsbereich zwischen 0,01 mPas und 100000 mPas, d.h. von Gasen, wie z.B. Luft bis hin zu sehr zähen Flüssigkeiten und pastösen Stoffen. Die Überlagerung der Gleichspannung geschieht vorzugsweise über einen programmierbaren Spannungsteiler, wobei die Überlagerung dann unmittelbar in einem Effektivgleichrichter vorgenommen werden kann, der dem Meßsensor nachgeschaltet ist.

Gemäß einer weiteren bevorzugten Ausführungsform wird dem üblicherweise hochohmigen Meßsensor ein Impedanzwandler nachgeschaltet, der in möglichst geringer Entfernung zum Meßsensor angebracht ist. Dadurch wird die Wirkung der die Messung erschwerenden Parallelkapazitäten geringer und der Sensor insgesamt unanfälliger gegen Störeinflüsse von außen. Weiterhin wird der Einfluß der nachfolgenden Kabellängen wesentlich vermindert.

Die Abmessungen eines aus Quarz bestehenden Meßsensors liegen vorzugsweise zwischen einer Länge von 35 bis 100 mm und einem Durchmesser von 4 bis 12 mm. Die kürzeren Längen und die kleineren Durchmesser sind insbesondere zur Messung von niedrigeren Viskositäten (Gase) geeignet.

Weitere Vorteile, Merkmale und Anwendungsmöglichkeiten der vorliegenden Erfindung ergeben sich aus der nachfolgenden Beschreibung eines Ausführungsbeispieles im Zusammenhang mit den Figuren. Darin zeigen:

Fig.1 eine perspektivische Ansicht eines Meßsensors zum Einbau in Viskosimeter nach den Ausführungsbeispielen der Fig. 4 bis 7;

Fig. 2 eine teilweise geschnittene Seitenansicht des Meßsensors gemäß Fig. 1;

Fig. 3 eine Stirnansicht des Meßsensors gemäß Fig. 1;

Fig. 4 eine teilweise geschnittene Seitenansicht eines Ausführungsbeispiels eines Viskosimeters gemäß der vorliegenden Erfindung;

Fig. 5 eine Frontansicht des Viskosimeters gemäß Fig. 4;

Fig. 6 eine schematische Darstellung des Einbaus eines Viskosimeters gemäß den Fig. 4 und 5 in ein Rohrleitungssystem;

Fig. 7 ein zweites Ausführungsbeispiel eines Viskosimeters gemäß der vorliegenden Erfindung;

Fig. 8 ein Blockschaltbild einer Auswerteeinheit mit dem Meßsensor als Bestandteil des Viskosimeters gemäß den Fig. 4 bis 7.

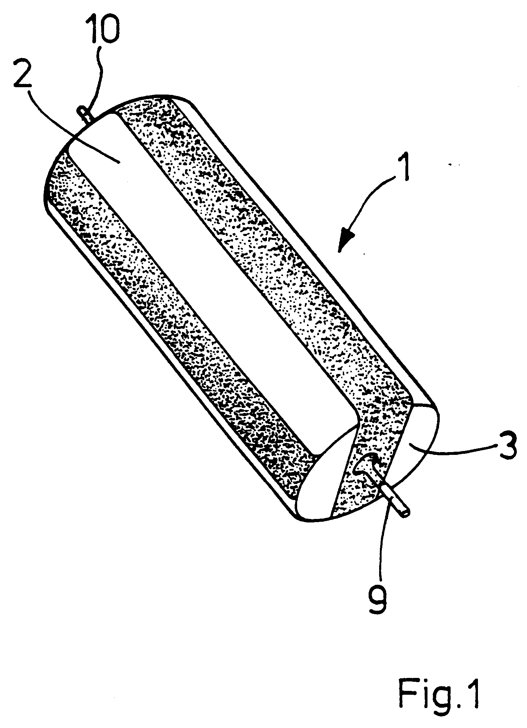

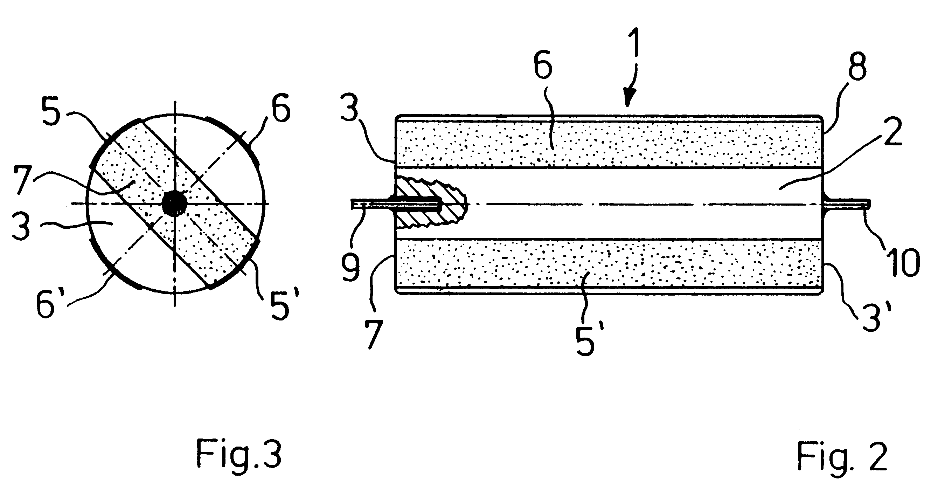

Zunächst wird die Herstellung des Quarzsensors in bezug auf die Fig. 1 bis 3 beschrieben.

Die Figuren zeigen den fertig kontaktierten Quarzsensor 1, der mittels eines Quarzkristalles 2 hergestellt wurde. Der aus chemisch weitgehend reinem $SiO_2$ bestehende Quarzkristall wurde in x-Richtung aus einem Einkristall geschnitten, wie dies in der DE-Z. "Tribologie + Schmierungstechnik", Jahrgang 1988, Seite 256 beschrieben ist. Der Quarzkristall weist insgesamt vier Elektroden 5, 5′ und 6, 6′ auf, die entlang des Zylindermantels parallel zu seiner Achse angeordnet sind. Die Elektroden 5, 5′ und die Elektroden 6, 6′ liegen einander jeweils exakt gegenüber und sind gegeneinander um einen Winkel von exakt 90 Grad versetzt. Alle Elektroden weisen in Umfangsrichtung gesehen die gleiche Breite auf und sind so dimensioniert, daß die von den Elektroden bedeckte Umfangsfläche des Zylinders etwa gleich groß ist wie die frei bleibende Umfangsfläche. Die Elektroden bestehen aus Metall, im vorliegenden Fall aus Gold, welches durch Aufdampfen oder eine andere geeignete Technik als sehr dünne Schicht auf den Quarz aufgebracht ist.

Die einander gegenüberliegenden Elektroden 5, 5′ bzw. 6, 6′ sind jeweils an einer Stirnfläche 3, 3′ des Quarzkristalles mit einem Kontaktband 7, 8 verbunden, welches ebenfalls als dünne Metallschicht ausgeführt ist. Im dargestellten Ausführungsbeispiel weist das Kontaktband in etwa die gleiche Breite auf wie die Elektroden und besteht auch aus dem gleichen Material, nämlich Gold.

An beiden Seiten des Quarzkristalles ist konzentrisch zur Zylinderachse ein erster Metallstift 9 und auf der gegenüberliegenden Stirnfläche ein zweiter Metallstift 10 in den Kristall eingelassen. Die Metallstifte 9, 10 bestehen aus einer Edelstahllegierung und haben sowohl die Aufgabe, den Quarzkristall so zu halten, daß seine Schwingung möglichst wenig behindert wird, als auch den elektrischen Kontakt zu den Elektroden herzustellen.

Das Verfahren zur Herstellung des Quarzsensors wird nun nachfolgend im einzelnen beschrieben:

Verwendet wird ein Sweptquarz mit einer minimalen Anzahl von Fehlstellen. Der Quarz ist exakt zylindrisch, weist aber im Übergang Zylindermantel-Stirnfläche eine Abrundung mit einem Radius von 1 mm auf.

Dieser Quarz wird poliert, und anschließend werden sowohl die Elektroden auf dem Zylindermantel als auch der Metallfilm auf der Stirnfläche aufgedampft bzw. eingebrannt und ebenfalls poliert. Das Metall von Elektroden und Metallfilm ist vorzugsweise Gold.

Danach wird der Kristall von beiden Stirnseiten aus zentrisch auf eine Tiefe von 3 mm angebohrt. Anschließend werden die Stifte in den Quarzkristall eingeklebt. Die Stifte bestehen aus einem Edelstahl, dessen Ausdehnungskoeffizient im wesentlichen dem Ausdehnungskoeffizienten des Quarzkristalles entspricht, wobei die Ausdehnungsrichtung des Kristalles berücksichtigt werden muß. Zum Einkleben der Metallstifte wird ein hochtemperaturbeständiger Zwei-Komponenten-Keramik-Kleber auf $SiO_2$-Basis verwendet, wie er z.B. von der Firma Kager GmbH in Frankfurt, Bundesrepublik Deutschland, geliefert wird. Nachdem die Keramikklebung luftgetrocknet wurde, wird ein Silber-Einbrennpräparat mittels eines Pinsels im Bereich des Überganges zwischen dem Metallstift und der Stirnfläche des Quarzkristalles aufgetragen. Ein derartiges Einbrennpräparat weist einen Lackanteil auf, der bei Einbrenntemperatur rückstandsfrei verbrennt und eine mit steigender Temperatur immer dichter versinterte Metallschicht ergibt. Ein solches Silber-Einbrennpräparat kann z.B. von der Firma Demetron GmbH, Hanau, Bundesrepublik Deutschland, bezogen werden. Es hat sich gezeigt, daß ein Silberanteil von ungefähr 68 % zu bevorzugen ist.

Versuche mit dem Auftragen haben ergeben, daß optimale Resultate erzielt werden, wenn die dickste Stelle des Auftragens des Silber-Einbrennpräparates unter 0,5 mm liegt.

Der so bearbeitete Quarzkristall wird dann langsam im Ofen unter Luftsauerstoff auf 550 °C aufgeheizt, wobei die Aufheizgeschwindigkeit vorzugsweise 75 °C pro Stunde beträgt. Nach dem Erreichen der Maximaltemperatur von 550 °C wird diese vorzugsweise für 0,5 Stunden konstant gehalten. Anschließend wird der Quarzkristall auf Raumtemperatur abgekühlt, wobei wiederum ein maximaler Temperaturgradient von 75 °C pro Stunde eingehalten wird.

Versuche haben ergeben, daß eine optimale Wirkung erzielt wird, wenn der vorbeschriebene Einbrennvorgang mindestens dreimal wiederholt wird.

Nach der Beendigung des Einbrennens und der Abkühlung des Quarzsensors wird das eingebrannte Metallpräparat poliert, wobei optimale Ergebnisse bei einer Rauhtiefe $\leq 0,5$ μm erzielt wurden. Der so hergestellte Quarzsensor kann nun zur Messung in ein Viskosimeter eingesetzt werden.

Soll der Quarz in einer elektrisch leitfähigen Flüssigkeit eingesetzt werden, kann er gemäß einer bevorzugten Ausgestaltung der vorliegenden Erfindung elektrisch passiviert werden. Dies geschieht erfindungsgemäß, indem der Quarz allseitig mit einer elektrisch nicht leitenden Beschichtung mit $SiO_2$ oder $Al_2O_3$ versehen wird. Die Schicht wird in einer Bedampfungseinrichtung auf den polierten Quarzsensor aufgebracht und weist eine Schichtdicke von 1 bis 2μm auf.

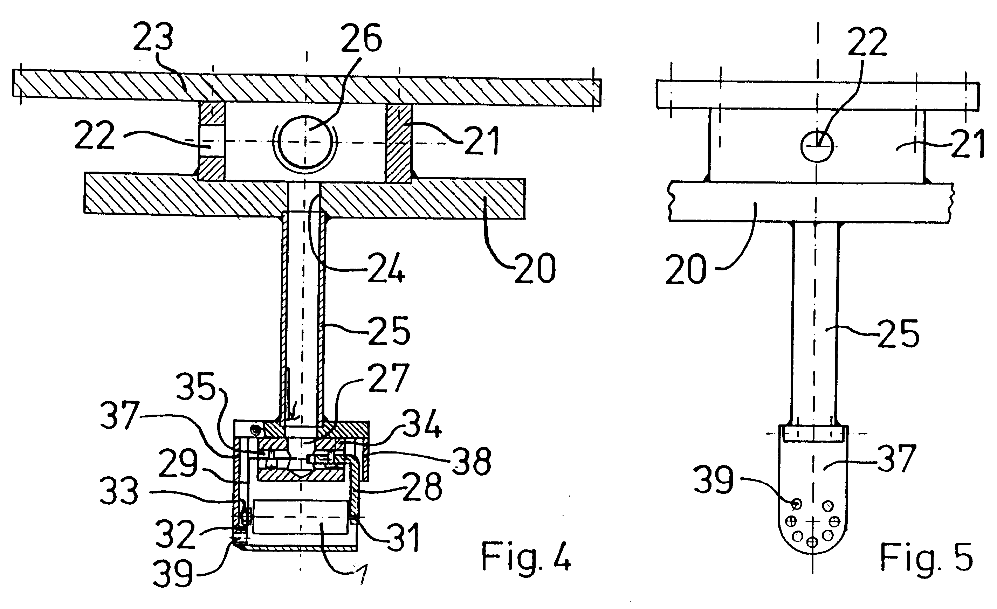

Mit Bezug auf die Fig. 4 und 5 wird nun ein erstes Ausführungsbeispiel eines erfindungsgemäßen Quarzviskosimeters beschrieben, in dem der erfindungsgemäß hergestellte Quarzsensor verwendet wird.

Das dargestellte Viskosimeter ist derart konzipiert, daß es mittels eines (in Deutschland genormten) T-Rohrstückes in eine vorhandene Rohrleitung eingesetzt werden kann. Dadurch kann das Quarzviskosimeter problemlos zur Viskositätsmessung in chemischen und physikalischen Prozessen eingesetzt werden.

Das Quarzviskosimeter weist einen runden Flansch 20 auf, der über (nicht dargestellte) Bohrungen und eine Dichtung mit dem Normflansch eines T-Rohrstückes verschraubt werden kann. An dem Flansch ist ein rohrförmiger Stutzen 21 vorgesehen, der mehrere Bohrungen 22 aufweist. Auf der vom Flansch 20 abgewandten Seite ist der Stutzen 21 mit einer reckteckigen Platte 23 abgedeckt. Der Stutzen 21 und die darin befindlichen Bohrungen 22 dienen dem Explosionsschutz, falls das Viskosimeter in Verbindung mit explosionsgefährdeten Flüssigkeiten verwendet wird.

In eine Gewindebohrung 26 am Stutzen 21 ist eine (nicht dargestellte) Kabelverschraubung eingesetzt, durch die die Meßkabel zur (nicht dargestellten) Auswerteeinheit geführt sind. Die Auswerteeinheit wird vorzugsweise unmittelbar auf der rechteckigen Platte 23 angeordnet.

Im Flansch 20 ist eine Bohrung 24 vorgesehen, in der ein zylindrisches Rohr 25 eingeschweißt ist.

Der eigentliche Meßkopf 27 weist einen dicken ersten Bügel 28 und einen zweiten, dünnwandigen Bügel 29 auf. Zwischen diesen beiden Bügeln ist ein Quarzsensor 1, der wie in den Fig. 1 bis 3 dargestellt aufgebaut ist, federnd gehalten. Dazu weist der dickwandige Bügel eine Sackbohrung 31 und der dünnwandige Bügel eine Durchgangsbohrung 32 auf. Die Bohrungen nehmen die Metallstifte 9, 10 des Quarzsensors auf. Die Bohrung 32 des Bügels 29 ist so bemessen, daß eine mit einer Aufnahmeöffnung für den Metallstift des Quarzsensors versehene Befestigungseinheit 33, bestehend aus einer Schraube und einer Mutter, aufgenommen werden kann.

Die beiden Bügel 28, 29 sind auf ihrer vom Quarzsensor abgewandten Seite rechtwinklig abgewinkelt und in einer Halterung 34 geführt. In dieser Halterung sind die beiden Bügel mit den (nicht dargestellten) Zuleitungen zur Stromspeisung des Quarzes verbunden. Die beiden Bügel 28, 29 sind im verdrahteten Zustand mit einer Keramik- bzw. Glasmasse 35 in die Halterung 34 eingegossen. Dadurch wird eine sichere elektrische Isolation und eine zuverlässige Abdichtung erzielt. Die Meßleitungen, die nicht dargestellt sind, werden durch das Rohr 25 in den rohrförmigen Stutzen geführt und mit der in Fig.4 und 5 nicht gezeigten Auswerteeinheit verbunden.

Die vorstehend beschriebenen Teile des Quarzviskosimeters bestehen im wesentlichen aus Stahl bzw. Edelstahl, wodurch gleichzeitig eine gute elektrische Abschirmung des Quarzsensors erreicht wird.

Um die elektrische Abschirmung des Quarzsensors und der Zuleitungen weiter zu verbessern, und um eine reproduzierbare Anströmung des Quarzes in einem strömenden Fluid zu erhalten, ist eine zusätzliche metallische Abdeckung 37, 38 vorgesehen, wobei die in Strömungsrichtung vorne liegende Abdeckung 37 über die Achse des Quarzsensors hinaus geführt und eine Vielzahl von konzentrisch zur Zylinderachse des Quarzes angebrachte Bohrungen 39 aufweist. Diese Bohrungen bewirken, daß die strömende Flüssigkeit turbulenzarm am zylindrischen Quarzsensor entlangströmt. Dabei wird die Einbaurichtung des beschriebenen Viskosimeters so gewählt, daß die Zylinderachse des Quarzsensors im wesentlichen parallel zur Hauptströmungsrichtung liegt.

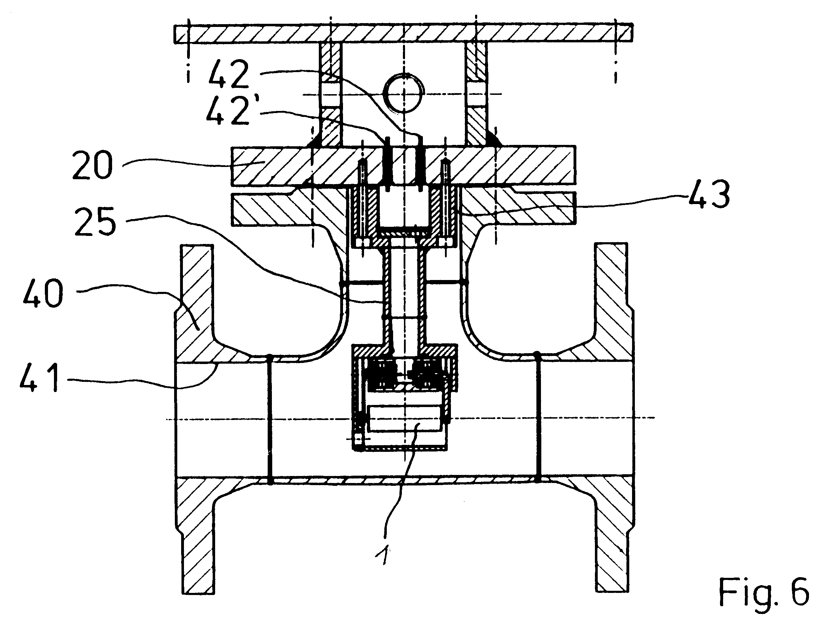

Die Fig. 6 zeigt den Einbau des Viskosimeters gemäß den Fig. 4 und 5 in ein T-förmiges Rohrstück 40. Wie der Darstellung zu entnehmen ist, liegt die Zylinderachse des Quarzsensors 1 nicht nur parallel zur Strömungsrichtung, sondern fällt mit der Achse des zylindrischen Durchströmungskanals zusammen. In der Darstellung sind auch Durchführungen 42, 42' zu erkennen, durch die die (nicht dargestellten) Meßleitungen, die die Auswerteeinheit mit dem Quarzsensor verbinden, durch den unteren Flansch 20 geführt sind. Diese Durchführungen sind mit einer elektrisch isolierenden Masse, vorzugsweise einer temperaturbeständigen Glas- oder Keramikmasse, vergossen. Es ist darauf hinzuweisen, daß der obere Bereich des in Fig. 6 dargestellten Viskosimeters geringfügig von dem Ausführungsbeispiel gemäß Fig. 4 und 5 abweicht, da hier das Rohr 25 nicht unmittelbar an den Flansch 20 geschweißt, sondern in der Halteeinrichtung 43 eingeschweißt ist, die mit dem Flansch 20 verschraubt ist.

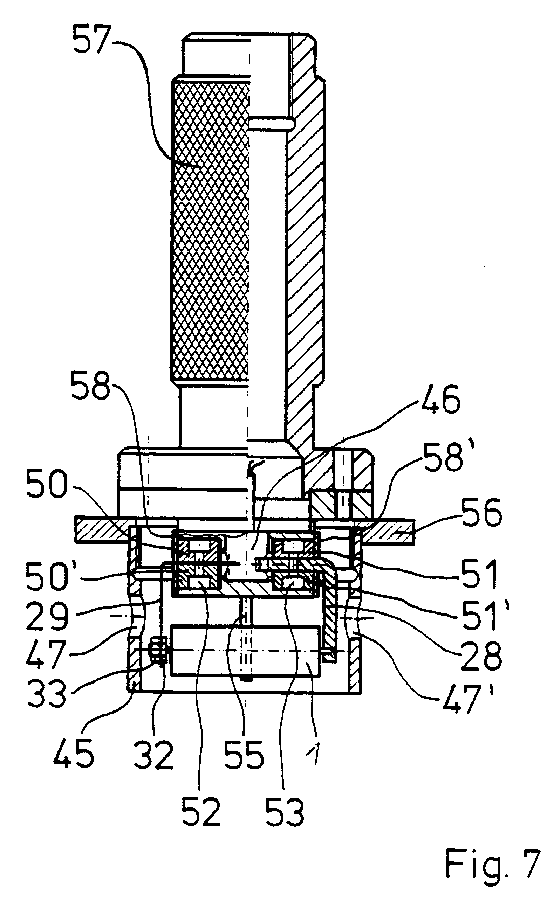

Ein zweites Ausführungsbeispiel des erfindungsgemäßen Quarzviskosimeters zeigt in einem Teilschnitt die Fig. 7. Dieses Viskosimeter ist als Labor- oder Handviskosimeter gestaltet und dafür vorgesehen, von einer Bedienungskraft teilweise in die zu messende Flüssigkeit eingetaucht zu werden. Der Meßkopf dieses Viskosimeters ist in sehr ähnlicher Weise gestaltet wie der Meßkopf 27 des in bezug auf die Fig. 4 und 5 beschriebenen Viskosimeters und bedarf deshalb keiner weiteren Erläuterung. Zur Vereinfachung wurden für die Teile, die mit den Teilen der Fig. 4 und 5 identisch oder weitestgehend identisch sind, die gleichen Bezugszeichen verwendet.

Bei diesem Ausführungsbeispiel wird eine zylindrische Abdeckhaube 45 verwendet, die den eigentlichen Meßkopf 46 des Viskosimeters vollständig abdeckt. Dadurch kann das Viskosimeter auf einfache Weise abgestellt werden und ist auch während des Gebrauchs optimal gegen Beschädigungen geschützt. Da die Abdeckhaube nach unten hin offen ist, genügen zwei kreisförmige Bohrungen 47, 47' in der Abdeckhaube, deren Achsen parallel zur Zylinderachse des Quarzkristalles sind und im wesentlichen im Bereich der (in Fig. 7) oberen Scheitellinie des Zylindermantels des Quarzkristalles liegen.

Im Unterschied zur Gestaltung gemäß der vorher beschriebenen Ausführungsform sind hier die beiden Bügel 28, 29 in keramische Isolierblöcke 50, 50' bzw. 51, 51' eingeführt und mit diesen durch eine nur schematisch angedeutete Verschraubung 52, 53 verschraubt.

Eine Positionsänderung der Isolierblöcke 50, 50', 51, 51' und der beiden Bügel wird durch die formschlüssigen Verspannungselemente 58, 58' verhindert. Diese Verspannungselemente werden mit dem Meßkopf durch über eine (nicht dargestellte) Verschraubung verbunden.

Im Bereich des Quarzsensors ist weiterhin ein Temperatursensor 55 vorgesehen, der ein übliches Thermoelement, vorzugsweise jedoch ein PT 100 Widerstandselement ist.

Der Meßkopf 46 mit der Abdeckhaube 45 ist mittels eines Ringes 56 mit einer rohrförmigen Halterung 57 versehen, die zum Halten des Viskosimeters durch die Bedienungskraft dient.

Die Zuführungen des Speisestroms zu den Bügeln bzw. die Erfassung der Meßsignale des Temperatursensors geschehen bzw. geschieht über (nicht dargestellte) Meßleitungen, die durch die innere Öffnung der Halterung geführt sind. Vorzugsweise werden insbesondere die Durchführungen der Meßleitungen mit einer Keramikmasse oder mit Glas vergossen, um die Durchführung abzudichten und um Kapazitätsänderungen bei einer Lageänderung der Meßkabel auszuschließen.

Auch bei diesem Viskosimeter sind die Abdeckhaube, der Handgriff und die elektrisch nicht isolierten Befestigungsteile aus Metall ausgebildet, um eine optimale elektrische Abschirmung zu erreichen.

Die Auswertung der mit den vorbeschriebenen Quarzviskosimetern aufgenommenen Meßsignale setzt eine komplexe Analyse des Schwingungsverhaltens von Quarzschwingern in dämpfenden Fluiden voraus. Eine derartige Analyse ist in der Dissertation Berthold Bode: "Entwicklung eines Quarzviskosimeters für Messungen bei hohen Drücken", Technische Universität Clausthal, 1984 enthalten. Auf den Seiten 5 bis 153 dieser Druckschrift ist im einzelnen dargelegt, wie die mit einem Quarzsensor (im dortigen Fall handelt es sich um einen Längsdehnungsschwinger) erfaßten Meßsignale zur Bestimmung der Viskosität der Flüssigkeit herangezogen werden können. Nach dem dort beschriebenen Verfahren wird anhand der theoretischen Analyse ein Zusammenhang zwischen der Viskosität und der Dichte des zu messenden Fluids und der für die Flüssigkeit bestimmten Resonanzfrequenz des Quarzes, sowie der Resonanzfrequenz des Quarzes im ungedämpften Zustand im Vakuum und einer apparatespezifischen Konstante ermittelt.

Zur Bestimmung der Viskosität ist es demnach erforderlich, die Resonanzfrequenz des Quarzsensors zu bestimmen, wenn dieser vollständig vom zu messenden Fluid benetzt ist. Die Messung mit dem vorbeschriebenen Quarzviskosimeter wird durchgeführt, indem der Quarzsensor mit einer Wechselspannungsquelle verbunden wird, die eine sinusförmige Wechselspannung mit veränderlicher Frequenz liefert. Mittels eines hochauflösenden Voltmeters wird die Frequenz bestimmt, bei der die Spannungsamplitude des Quarzes ein relatives Maximum erreicht. Dies ist die Resonanzfrequenz, aus der dann durch eine entsprechende Umrechnung die gesuchte Viskosität bestimmt werden kann.

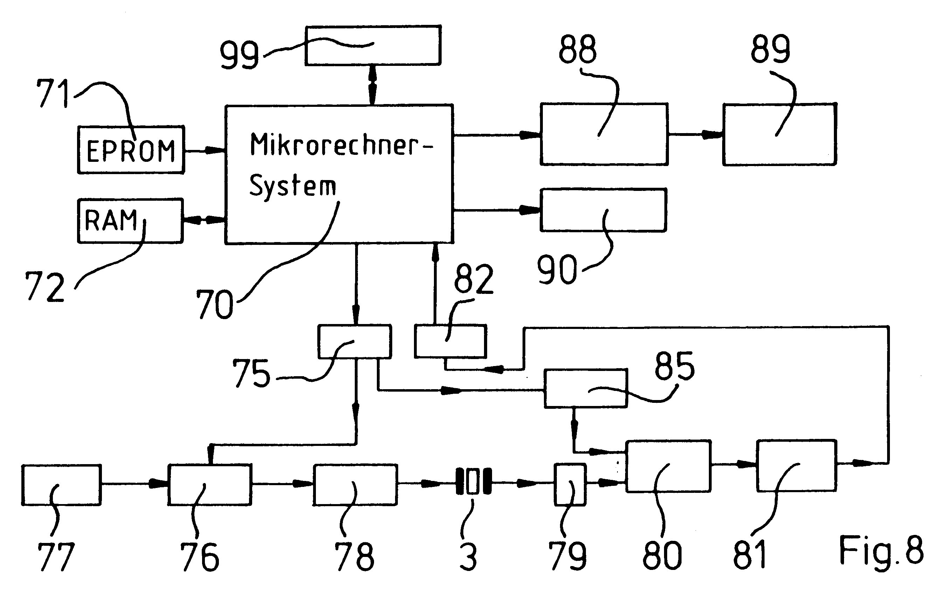

Eine Auswerteeinheit, die die Bestimmung dieser Meßgrößen automatisch durchführt, wird nun in bezug auf die Fig. 8 beschrieben. Es wird darauf hingewiesen, daß die in Anspruch 1 genannte Wechselspannungsquelle bei diesem Ausführungsbeispiel unmittelbar in die Auswerteeinheit integriert ist.

Das gezeigte Ausführungsbeispiel weist einen Mikroprozessor 70 auf, der als Einplatinencomputer mit einer Z80-CPU aufgebaut ist.

Der Mikroprozessor ist über Datenleitungen, die nur schematisch angedeutet sind, mit zwei Speichereinheiten, nämlich einem EPROM 71 und einem RAM 72 verbunden.

Das EPROM 71 mit einer Kapazität von 32 kByte enthält das Programm zur Steuerung des Mikroprozessors 70, das, vorzugsweise gepufferte, RAM 72 dient als Arbeitsspeicher für den Mikroprozessor.

Über eine erste Schnittstelle 75 ist der Mikroprozessor 70 mit einem Synthesizer 76 verbunden. Dieser Synthesizer empfängt die Zeitsignale der System Clock 77 und gibt ein Ausgangssignal an einen Treiber 78 ab, der unmittelbar mit je zwei gegenüberliegenden Elektroden des Quarzsensors 3 in Verbindung steht. Der Synthesizer 76 ist im vorliegenden Fall, zur Vereinfachung des Meßaufbaus, ein einfacher Rechteckgenerator. Statt der rechteckförmigen Wechselspannung kann aber auch eine sinusförmige Wechselspannung verwendet werden.

Das Ausgangssignal der beiden anderen gegenüberliegenden Elektroden des Quarzsensors 30 wird mittels eines Effektivwert-Gleichrichters 80 gleichgerichtet und einem A/D-Wandler 81 zugeführt. Da das Spannungssignal des Quarzes sehr gering ist, weist der A/D-Wandler 81 vorzugsweise eine Auflösung von 20 Mikrovolt auf.

Gemäß einer besonders bevorzugten Ausführungsform der Erfindung wird zwischen dem Quarzsensor, der ein hochohmiges Ausgangssignal liefert, und dem Effektivwert-Gleichrichter 80 ein Impedanz-Wandler 79 zwischengeschaltet. Dieser Impedanzwandler wird vorzugsweise so nahe wie möglich am Meßsensor, d.h. im Meßkopf angeordnet und verringert für die Auswertung nachteilige Parallelkapazitäten und die Wirkung von äußeren Einflüssen, die sonst die Messungen stören könnten.

Das Signal des A/D-Wandlers 81 wird über eine zweite Schnittstelle 82 wieder dem Mikroprozessor zugeführt.

Die Auswerteeinheit soll erfindungsgemäß einen großen Meßbereich aufweisen, der im Bereich zwischen 0,01 mPas bis 100000 mPas liegen soll. Die erfindungsgemäße Auswerteeinheit weist deshalb eine Einrichtung auf, die es erlaubt, den Meßbereich des Quarzviskosimeters automatisch an die jeweilige Flüssigkeit anzupassen.

Zu diesem Zweck ist der Mikroprozessor, beim Ausführungsbeispiel ebenfalls über die erste Schnittstelle 75, mit einem programmierbaren Spannungsteiler 85 verbunden. Das Ausgangssignal des Spannungsteilers wird der gemessenen Spannung als Offsetspannung überlagert. Der A/D-Wandler 81 verarbeitet deshalb in diesem Fall die Summe aus der eigentlichen Meßspannung und der Offsetspannung.

Der Mikroprozessor 75 kann mit verschiedenen Möglichkeiten versehen werden, die aufgenommenen Meßergebnisse auszugeben.

Bei komplexeren Prozeßsteuerungen kann das Mikroprozessorsystem unmittelbar über eine entsprechende Schnittstelle mit einem übergeordneten Steuerrechner verbunden werden. An diesen Steuerrechner gibt der Mikroprozessor dann die gefundenen Viskositätsdaten weiter und empfängt entsprechende Steuersignale.

Eine weitere Möglichkeit, die alternativ oder zusätzlich verwendet werden kann, ist die Ausgabe von Steuersignalen aus dem Mikroprozessorsystem an einen programmierbaren Regler 88. Der programmierbare Regler kann dann über einen alternativen Spannungs- oder Stromausgang bzw. über einen Grenzwertmelder mit einem Stellglied 89 verbunden werden, welches unmittelbar in den jeweiligen Prozeß eingreift.

Schließlich ist es noch möglich, die berechneten Viskositätswerte sowie gegebenenfalls weitere Informationen unmittelbar über ein LCD- oder LED-Display 90 auszugeben, welches ebenfalls mit dem Mikroprozessor verbunden ist.

Die Funktion dieser Auswerteeinheit ist nun wie folgt:

Das System wird über ein entsprechendes Signal gestartet und lädt das zur Auswertung benötigte Programm in den Arbeitsspeicher 72. Auf Grundlage dieses Programms wird über die erste Schnittstelle 75 ein Signal an den Synthesizer 76 ausgegeben, der in Verbindung mit dem Timer-Signal der Systemuhr 77 über den Treiber 78 den Quarzsensor mit einer Spannung mit einer vom Programm vorgegebenen Frequenz beaufschlagt. Das Spannungssignal des Quarzes wird über den Effektivwert-Gleichrichter 80 und den A/D-Wandler 81 als Digitalwert an das Mikroprozessorsystem zurückgeführt. Die Frequenz wird nun durch das Programm so lange geändert, bis das Spannungsmaximum ermittelt ist. Aus diesem Spannungsmaximum wird, auf Grundlage der im Programm vorgegebenen Auswertegleichungen, die Viskosität bzw. das Produkt aus Viskosität und Dichte ermittelt und über das Display 90 angezeigt bzw. zur weiteren Verarbeitung oder Prozeßsteuerung herangezogen.

Stellt der Mikroprozessor anhand des Programmes fest, daß die vom A/D-Wandler gelieferten Signale unterhalb eines minimalen Grenzwertes oder oberhalb eines maximalen Grenzwertes liegen, wird ein Befehl an den programmierbaren Spannungsteiler 85 gegeben, die Offsetspannung zu verändern, bis das Meßsignal innerhalb der vorgegebenen Grenzwerte bleibt.

**Patentansprüche**

1. Vorrichtung zur Messung der Viskosität von Fluiden mit einem Meßsensor, welcher einen zylinderförmigen piezo- elektrischen Grundkörper mit vier, am Zylindermantel parallel zur Zylinderachse in gleichem Winkelabstand zueinander angeordneten Elektroden aufweist,
   einer Halteeinrichtung, in der der Meßsensor gehalten ist,
   einem Basiskörper, an dem die Halteeinrichtung befestigt ist,
   einer Wechselspannungsquelle deren Spannung den Elektroden des Meßsensors zugeführt wird, um diesen zu Torsionsschwingungen anzuregen,
   einer Auswerteeinheit, welche die elektrische Reaktion des Meßsensors auf die angelegte Wechselspannung erfaßt und daraus einen Kennwert zur Ermittlung der Viskosität des den Meßsensor umgebenden Fluids bestimmt,
   **dadurch gekennzeichnet,**
   daß an jeder Stirnseite des zylindrischen Grundkörpers des Meßsensors jeweils zwei einander gegenüberliegende Elektroden über einen auf die Stirnseite aufgebrachten Metallfilm miteinander verbunden sind,
   daß an jeder Stirnseite ein axial nach außen vorspringendes metallisches Halteelement in den piezoelektrischen Grundkörper eingelassen ist und daß eine elektrisch leitfähige Verbindung zwischen dem metallischen Halteelement und dem Metallfilm über eine Metall enthaltende Schicht erfolgt, die bei erhöhter Temperatur im Verbindungsbereich zwischen Halteelement und Metallfilm eingebrannt ist.

2. Vorrichtung gemäß Anspruch 1, dadurch gekennzeichnet, daß die Metall enthaltende Schicht eine Silber-Einbrennverbindung ist, die vorzugsweise bei einer Temperatur von 450 bis 550 °C eingebrannt ist.

3. Vorrichtung gemäß Anspruch 1 oder 2, dadurch gekennzeichnet, daß der auf die Stirnseiten des zylindrischen piezoelektrischen Meßsensors aufgebrachte Metallfilm aus einem Edelmetall, vorzugsweise aus Gold oder Platin besteht.

4. Vorrichtung gemäß mindestens einem der Ansprüche 1 bis 3, dadurch gekennzeichnet, daß die Elektroden als Film aus einem Edelmetall, vorzugsweise Gold oder Platin ausgebildet sind, wobei das Material der Elektroden und das Material des auf den Stirnseiten angeordneten Metallfilms vorzugsweise identisch ist.

5. Vorrichtung gemäß mindestens einem der Ansprüche 1 bis 4, dadurch gekennzeichnet, daß die metallischen Halteelemente aus Edelstahl bestehen, welche in eine koaxial zu dessen Zylinderachse verlaufende Bohrung des Grundkörpers eingelassen sind und vorzugsweise mit dem Grundkörper mittels eines temperaturbeständigen Klebstoffes verklebt sind.

6. Vorrichtung gemäß mindestens einem der Ansprüche 1 bis 5, dadurch gekennzeichnet, daß der Grundkörper des Meßsensors aus Quarz, das heißt aus $SiO_2$ besteht, welches vorzugsweise eine erhöhte chemische Reinheit aufweist.

7. Vorrichtung gemäß mindestens einem der Ansprüche 1 bis 6, dadurch gekennzeichnet, daß die Halteeinrichtung zwei im wesentlichen symmetrisch zum Meßsensor angeordnete Bügel aufweist, in welchen die Halteelemente des Meßsensors befestigt sind.

8. Vorrichtung gemäß Anspruch 7, dadurch gekennzeichnet, daß die Bügel mit einer oder mehreren isolierenden Zwischenlagen am Basiskörper befestigt sind.

9. Vorrichtung gemäß Anspruch 7 oder 8, dadurch gekennzeichnet, daß die Bügel mit einem Verbindungsteil des Basiskörpers mit einer temperaturbeständigen, isolierenden Masse, welche vorzugsweise aus Glas oder Keramik besteht, vergossen sind.

10. Vorrichtung gemäß mindestens einem der Ansprüche 1 bis 9, dadurch gekennzeichnet, daß eine metallische Abdeckung am Basiskörper vorgesehen ist, welche den piezoelektrischen Meßsensor teilweise und mit einem Abstand umgibt, und welche mit Öffnungen versehen ist, durch die das zu messende Fluid den Meßsensor umströmen kann.

11. Vorrichtung gemäß mindestens einem der Ansprüche 1 bis 10, dadurch gekennzeichnet, daß am Basiskörper weiterhin ein Temperatursensor, vorzugsweise ein temperaturabhängiger Widerstand, angeordnet ist.

12. Vorrichtung gemäß mindestens einem der Ansprüche 1 bis 11, dadurch gekennzeichnet, daß der Basiskörper mit einer Flanschplatte versehen ist, durch die der Basis- körper mit dem Meßsensor in ein mit einem Flansch versehenes Rohrstück eingesetzt und verschraubt werden kann.

13. Vorrichtung gemäß mindestens einem der Ansprüche 1 bis 12, dadurch gekennzeichnet, daß der Meßsensor einschließlich der darauf aufgebrachten Metallschichten mit einem elektrisch nicht leitenden Überzug versehen ist.

14. Vorrichtung gemäß Anspruch 13, dadurch gekennzeichnet, daß der Überzug aus $SiO_2$ besteht.

15. Vorrichtung gemäß Anspruch 13, dadurch gekennzeichnet, daß der Überzug aus Aluminiumoxid, d.h. $Al_2O_3$ besteht.

16. Vorrichtung gemäß mindestens einem der Ansprüche 12 bis 15, dadurch gekennzeichnet, daß die Halteeinrichtung und alle Teile der Stromzuführung zum Meßsensor gegenüber dem zu messenden Fluid elektrisch isoliert sind.

17. Vorrichtung gemäß mindestens einem der Ansprüche 1 bis 16, dadurch gekennzeichnet, daß die Auswerteeinheit einen Prozessor, vorzugsweise einen Mikroprozessor aufweist, durch den die Erzeugung der an den Meßsensor anzulegenden Wechselspannung gesteuert und das Meßsignal ausgewertet wird.

18. Vorrichtung gemäß Anspruch 17, dadurch gekennzeichnet, daß ein vom Prozessor gesteuerter Spannungsteiler vorgesehen ist, durch den dem Meßsignal eine veränderbare Gleichspannung überlagert wird.

19. Vorrichtung gemäß mindestens einem der Ansprüche 1 bis 18, dadurch gekennzeichnet, daß der zylindrische Grund- körper des Meßsensors im Übergangsbereich zwischen Zylindermantel und Stirnflächen eine Abrundung mit einem Radius von vorzugsweise 0,5 bis 1,5 mm aufweist.

20. Verfahren zur Herstellung eines Meßsensors für ein Quarzviskosimeter gemäß Anspruch 1, gekennzeichnet durch folgende Verfahrensschritte:
    - Schneiden eines zylindrischen Grundkörpers aus einem Einkristall mit piezoelektrischen Eigenschaften, in einer eine reine Torsionsschwingung ermöglichenden Schnittrichtung;
    - Polieren des piezoelektrischen zylindrischen Grundkörpers;
    - Aufbringen von vier filmartigen Metallelektroden auf den Zylindermantel des Grundkörpers, welche jeweils die gleiche Breite und den gleichen Winkelabstand zueinander aufweisen, in einer Winkelanordnung, welche die Erzeugung von Torsionsschwingungen ermöglicht;
    - Aufbringen eines Metallfilms, vorzugsweise aus Edelmetall, auf beide Stirnflächen des Grundkörpers, welcher jeweils zwei andere, sich auf dem Grundkörper gegenüberliegende Elektroden miteinander verbindet, wobei dieser Metallfilm so angeordnet ist, daß er die Zylinderachse des Grund-

EP 0 527 176 B1

körpers überdeckt;
- Zentrisches Anbohren beider Stirnseiten des Grundkörpers;
- Einsetzen von metallischen Halteelementen in die Bohrungen an den Stirnseiten;
- Auftragen eines metallischen Einbrennpräparates im Kontaktbereich zwischen Metallfilm und Halteelementen;
- Einbrennen des Metallpräparates.

21. Verfahren gemäß Anspruch 20, dadurch gekennzeichnet, daß das Aufbringen der Elektroden und das Aufbringen des Metallfilms an den Stirnseiten durch Aufdampfen eines Edelmetalles erfolgt.

22. Verfahren gemäß Anspruch 20, dadurch gekennzeichnet, daß das Aufbringen der Elektroden und das Aufbringen des Metallfilms an den Stirnseiten durch Einbrennen eines Edelmetallpräparates erfolgt.

23. Verfahren gemäß Anspruch 20 oder 22, dadurch gekennzeichnet, daß die eingebrannte Metallverbindung nach dem Einbrennen poliert wird, und zwar vorzugsweise auf eine Rauhtiefe $R_t \leqq 0,5\ \mu\mathrm{m}$.

24. Verfahren gemäß mindestens einem der Ansprüche 20 bis 23, dadurch gekennzeichnet, daß der piezoelektrische Grundkörper aus Quarz, d.h. $SiO_2$ besteht und daß das Einbrennen bei einer Temperatur von zwischen 450 und 550 °C erfolgt.

25. Verfahren gemäß Anspruch 20, dadurch gekennzeichnet, daß als Einbrennpräparat ein Silber-Einbrennpräparat verwendet wird, welches eine Einbrenntemperatur im Bereich zwischen 500 und 550 °C aufweist und welches vorzugsweise einen Silberanteil von über 60 % aufweist.

26. Verfahren gemäß mindestens einem der Ansprüche 20 und 22 bis 25, dadurch gekennzeichnet, daß das Einbrennen der Metallverbindung in einem Ofen erfolgt, wobei der Meßsensor mit einem Temperaturgradienten von maximal 75 °C pro Stunde auf die Einbrenntemperatur erhitzt, 30 Minuten auf Einbrenntemperatur gehalten und anschließend mit einem Temperaturgradienten von maximal - 75 °C pro Stunde auf Raumtemperatur abgekühlt wird.

## Claims

1. A device for measuring the viscosity of fluids by means of a measurement sensor, having a cylindrical piezoelectric base body, with four electrodes, mutually separated by the same angular distance and arranged on the cylinder envelope in a direction parallel to the cylinder axis, a holding device, by which the measurement sensor is retained,
a basis, to which the holding device is secured,
an alternative voltage source, the voltage of which is supplied to the electrodes of the measurement sensor in order to generate torsional oscillations,
an evaluating unit, detecting the electric reaction of the measurement sensor to the applied alternative voltage and deduces therefrom a characteristic value to determine the viscosity of the fluid that surrounds the measurement sensor,
characterised in
that on each front face of the cyclindrical base body of the measurement sensor two mutually opposite electrodes are interconnected by a metal film, applied on the front face,
that in each front face, a metallic holding element that projects axially outwards is embedded and
that an electrically conductive connection between the metallic holding element and the metal film is ensured by a layer that contains a metal and that is baked at a higher temperature in the connecting zone between the holding element and the metal film.

2. A device according to claim 1, characterised in that the layer, containing metal is a silver baking composition, which is preferably baked with a temperature of 450 to 550°C.

3. A device according to claim 1 or claim 2, characterised in that the metal film, applied on the front side of the cylindrical piezoelectric measurement sensor consists of a precious metal, preferably gold or platinum.

4. A device according to at least one of claims 1 to 3, characterised in that the electrodes are formed as a film of a precious metal, preferably gold or platinium, the material or the electrodes and the material of

11

the metal film provided on the front faces, being preferably identical.

5. A device according to at least one of claims 1 to 4, characterised in that the metallic holding elements consist of precious metal, and are embedded in a hole of the base body, which is arranged coaxially to the cylinder axis of the base body, and are preferably adhered to the base body by means of a temperature resistent adhesive.

6. A device according to at least one of claims 1 to 5, characterised in that the base body of the measuring sensor is made of quartz, that means of $SiO_2$, which preferably has an increased chemical purity.

7. A device according to at least one of claims 1 to 6, characterised in that the holding device comprises two brakkets, which are arranged essentially symmetrical to the measurement sensor, in which the holding elements of the measurement sensors are secured.

8. A device according to claim 7, characterised in that the brackets are secured to the base body, with one or more insulating intermediate layers.

9. A device according to claim 7 or 8, characterised in that the brackets are molded together with a connecting part of the base body with a temperature resistent isulating material, which preferably is made of glass or ceramic.

10. A device according to at least one of claims 1 to 9, characterised in that a metallic cover is provided with the base body, which encloses the piezoelectric measurement sensor partly and distant thereform, and which is provided with openings, through which the fluid to be measured can flow around the measurement sensor.

11. A device according to at least one of claims 1 to 10, characterised in that a temperature sensor, preferably a temperature dependent resistor, is arranged at the base body.

12. A device according to at least one of claims 1 to 11, characterised in that the base body is provided with a flange plate, through which the base body and the measuring sensor can be inserted in a flange conduit and can be bolted with this conduit.

13. A device according to at least one of claims 1 to 12, characterised in that the measurement sensor and the metallic layers, which are provided on the measuring sensor, are provided with an electrically non-conductive coating material.

14. A device according to claim 13, characterised in that the coating material is made of $SiO_2$.

15. A device according to claim 13, characterised in that the coating material is made of aluminum oxide, that is $Al_2O_3$.

16. A device according to at least one of claims 12 to 15, characterised in that the holding device and all parts of the power supply are electrically insulated with respect to the fluid to be measured.

17. A device according to at least one of claims 12 to 16, characterised in that the evaluating unit comprises a processor, preferably a microprocessor, which controls the generation of the alternative current, supplied to the measurement sensor and evaluates the measurement signal.

18. A device according to claim 17, characterised in that a voltage divider is provided, which is controlled by the processor, by which a direct current can be superimposed to the measurement signal.

19. A device according to at least one of claims 1 to 18, characterised in that the cylindrical base body of the measurement sensor is provided with a curved portion between the cylinder envelope and the front faces, said rounded portion having a radius of preferably 0,5 to 1,5 mm.

20. A method for manufacturing a measurement sensor for a quartz viscometer according to claim 1, characterised by the following steps:
   - cutting a cylindrical base body of a single-crystal having piezoelectrical properties, in a cutting direction, which allows a pure torsional oscillation;

- polishing of the piezoelectric cylindrical base body;
- applying four film-shaped metal electrodes onto the cylinder envelope of the base body, which have the same width and the same angular distance in a angular arrangement, allowing the generation of torsional oscillations;
- applying a metal film, preferably of a precious metal, onto both front faces of the base body, mutually connecting two electrodes, arranged opposite to each other on the base body, said metal film being arranged such, that it covers the cylinder axis of the base body;
- centrical drilling of holes into both front faces of the base body;
- inserting of metallic holding elements into the holes at the front faces;
- applying a metal baking composition in the contact area between metal film and holding elements;
- baking of the metal composition.

21. Method according to claim 20, characterised in that the applying of the electrodes and the applying of the metal film at the front faces is made by a evaporization coating of a precious metal.

22. Method according to claim 20, characterised in that the applying of the electrodes and the applying of the metal film at the front faces is made by baking of a precious metal composition.

23. Method according to claim 20 or 22, characterised in that the baking metal composition is polished after the bakking procedure, preferably to a peak-valley-height $R_t \leqq 0,5$ $\mu$m.

24. Method according to at least one of claims 20 to 23, characterised in that the piezoelectric base body is made of quartz, that means $SiO_2$ and that the baking is carried out with a temperature between 450 and 550°C.

25. Method according to claim 20, characterised in that a silver baking composition is used as baking composition, having a baking temperature in the region between 500 and 550°C, and which preferably comprises more than 60 % silver.

26. Method according to at least one of claims 20 and 22 to 25, characterised in that the baking procedure is carried out in a furnace, and that the measurement sensor is heated with a maximum temperature gradient of 75 °C per hour to the baking temperature, is held for 30 minutes on this baking temperature and is then cooled with a maximum temperature gradient of 75°C per hour to ambient temperature.

**Revendications**

1. Dispositif de mesure de la viscosité de fluides comprenant un détecteur de mesure, constitué par un élément principal piézo-électrique de forme cylindrique comportant quatre électrodes situés sur le corps du cylindre parallèlement à l'axe du cylindre à une distance d'angle égale les uns par rapport aux autres, un dispositif de maintien, dans lequel le détecteur de mesure est maintenu, un élément de base, sur lequel le dispositif de maintien est fixé, une source de tension alternative, dont la tension est amenée aux électrodes du détecteur de mesure, pour exciter celui-ci à effectuer des vibrations torsionnelles, une unité d'analyse qui enregistre la réaction électrique du détecteur de mesure sur la tension alternative appliquée et, à partir de là, fixe un paramètre pour déterminer la viscosité du fluide entourant le détecteur de mesure,
   **caractérisé en ce**
   que sur chaque côté frontal de l'élément principal cylindrique du détecteur de mesure deux électrodes opposés sont reliés entre eux par l'intermédiaire d'un film métallique situé sur le côté frontal, que, sur chaque côté frontal, un élément de maintien métallique faisant saillie axialement vers l'extérieur est encastré dans l'élément principal piézo-électrique et qu'une liaison électriquement conductrice entre l'élément de maintien métallique et le film métallique a lieu par l'intermédiaire d'une couche contenant du métal, qui est cuite à température élevée dans le secteur de liaison entre l'élément de maintien et le film métallique.

2. Dispositif selon la revendication 1, caractérisé en ce que la couche contenant du métal est une liaison de cuisson en argent, qui est cuite de préférence à une température comprise entre 450 et 550°C.

3. Dispositif selon la revendication 1 ou 2, caractérisé en ce que le film métallique situé sur les côtés frontaux du détecteur de mesure piézo-électrique cylindrique est en métal précieux, de préférence en or ou en platine.

4. Dispositif selon au moins l'une des revendications 1 à 3, caractérisé en ce que les électrodes sont formés en tant que film en métal précieux, de préférence en or ou en platine, le matériel des électrodes et le matériel du film métallique situé sur les côtés frontaux étant de préférence identiques.

5. Dispositif selon au moins l'une des revendications 1 à 4, caractérisé en ce que les éléments de maintien métalliques sont en acier précieux, qu'ils sont incorporés dans un perçage de l'élément principal s'étendant coaxialement par rapport à son axe de cylindre et qu'ils sont collés de préférence avec l'élément principal au moyen d'une colle résistant à la température.

6. Dispositif selon au moins l'une des revendications 1 à 5, caractérisé en ce que l'élément principal du détecteur de mesure est en quartz, c'est-à-dire en $SiO_2$, dont la pureté chimique est de préférence élevée.

7. Dispositif selon au moins l'une des revendications 1 à 6, caractérisé en ce que le dispositif de maintien comprend deux brides placées de façon quasiment symétrique par rapport au détecteur de mesure, dans lesquelles les éléments de maintien du détecteur de mesure sont fixés.

8. Dispositif selon la revendication 7, caractérisé en ce que les brides sont fixées sur l'élément de base au moyen d'une ou de plusieurs couches intermédiaires isolantes.

9. Dispositif selon la revendication 7 ou 8, caractérisé en ce que les brides sont scellées avec une pièce de liaison de l'élément de base avec une masse isolante résistant à la température, composée de préférence en verre ou en céramique.

10. Dispositif selon au moins l'une des revendications 1 à 9, caractérisé en ce qu'un revêtement métallique est prévu sur l'élément de base, qui entoure le détecteur de mesure piézo-électrique partiellement et avec distance, et qui est pourvu d'ouvertures par lesquelles le fluide qui doit être mesuré peut s'écouler autour du détecteur de mesure.

11. Dispositif selon au moins l'une des revendications 1 à 10, caractérisé en ce qu'un détecteur de température, de préférence une résistance dépendante de la température, est placé en outre sur l'élément de base.

12. Dispositif selon au moins l'une des revendications 1 à 11, caractérisé en ce que l'élément de base est pourvu d'une plaque à bride, par laquelle l'élément de base peut être introduit et vissé dans un morceau de tuyau pourvu d'une bride.

13. Dispositif selon au moins l'une des revendications 1 à 12, caractérisé en ce que le détecteur de mesure y compris les couches métalliques situées dessus est pourvu d'un revêtement non conducteur d'électricité.

14. Dispositif selon la revendication 13, caractérisé en ce que le revêtement est en $SiO_2$.

15. Dispositif selon la revendication 13, caractérisé en ce que le revêtement est en oxyde d'aluminium, soit $Al_2O_3$.

16. Dispositif selon au moins l'une des revendications 12 à 15, caractérisé en ce que le dispositif de maintien et toutes les pièces alimentant le détecteur de mesure en courant sont isolés électriquement par rapport au fluide à mesurer.

17. Dispositif selon au moins l'une des revendications 1 à 16, caractérisé en ce que l'unité d'analyse comprend un processeur, de préférence un micro-processeur, par lequel la production du courant alternatif à appliquer au détecteur de mesure est commandée et le signal de mesure analysé.

18. Dispositif selon la revendication 17, caractérisée en ce qu'un diviseur de tension commandé par le processeur est prévu, par lequel une tension continue variable est superposée.

**19.** Dispositif selon au moins l'une des revendications 1 à 18, caractérisé en ce que l'élément principal cylindrique du détecteur de mesure comporte un arrondi d'un rayon allant de préférence de 0,5 à 1,5 mm dans la partie de transition entre le corps du cylindre et les surfaces frontales.

**20.** Procédé pour la fabrication d'un détecteur de mesure pour un viscosimètre de quartz, caractérisé par les étapes suivantes:
- Découpage d'un élément principal cylindrique d'un monocristal cylindrique ayant des caractéristiques piézo-électriques, dans une direction de coupe permettant une vibration torsionnelle pure;
- Polissage de l'élément principal cylindrique piézo-électrique;
- Pose de quatre électrodes métalliques en forme de film sur le corps du cylindre de l'élément principal, qui ont chacun la même largeur et la même distance d'angle l'un par rapport à l'autre, dans un ensemble d'angles permettant la formation de vibrations torsionnelles;
- Pose d'un film métallique, de préférence en métal précieux, sur les deux surfaces frontales de l'élément principal, qui relie entre eux deux autres électrodes opposés sur l'élément principal, ce film métallique étant placé de façon à couvrir l'axe de cylindre de l'élément principal;
- Perçage central des deux côtés frontaux de l'élément principal;
- Introduction d'éléments de maintien métalliques dans les perçages sur les côtés frontaux;
- Application d'une préparation de cuisson métallique dans le secteur de contact entre le film métallique et les éléments de maintien;
- Cuisson de la préparation métallique.

**21.** Procédé selon la revendication 20, caractérisé en ce que la pose des électrodes et la pose du film métallique sur les côtés frontaux a lieu en métallisant sous vide un métal précieux.

**22.** Procédé selon la revendication 20, caractérisé en ce que la pose des électrodes et la pose du film métallique sur les côtés frontaux a lieu en cuisant une préparation en métal précieux.

**23.** Procédé selon la revendication 20 ou 22, caractérisé en ce que la liaison métallique cuite est polie après la cuisson, ceci de préférence sur une profondeur de rugosité $R_t \leq 0,5\mu m$.

**24.** Procédé selon au moins l'une des revendications 20 à 23, caractérisé en ce que l'élément principal piézo-électrique est en quartz, c'est-à-dire en $SiO_2$, et que la cuisson a lieu à une température comprise entre 450 et 550°C.

**25.** Procédé selon la revendication 20, caractérisé en ce qu'une préparation de cuisson en argent est utilisée comme préparation de cuisson, dont la température de cuisson est comprise entre 500 et 550°C et dont la part d'argent est de préférence supérieure à 60%.

**26.** Procédé selon au moins l'une des revendications 20 et 22 à 25, caractérisé en ce que la cuisson de la liaison métallique a lieu dans un four, le détecteur de mesure étant chauffé avec un gradient thermique de 75°C maximum par heure à la température de cuisson, maintenu 30 minutes à la température de cuisson et finalement refroidi avec un gradient thermique de 75°C maximum par heure jusqu'à la température ambiente.

Fig.1

Fig.3

Fig. 2

EP 0 527 176 B1

Fig. 4

Fig. 5

EP 0 527 176 B1

Fig. 6

Fig. 7

Fig.8

EP 0 527 176 B1